# EUROPEAN PATENT SPECIFICATION

(11) **EP 0 814 917 B1**
(45) Date of publication and mention of the grant of the patent: **12.03.2003**
(21) Application number: 94923242.5
(22) Date of filing: 24.06.1994
(51) Int. Cl.: B05D 1/36, B41M 3/12, B32B 31/00, B29C 59/12, B29C 59/14

(54) **FLUOROPOLYMER COMPOSITE TUBE AND METHOD OF PREPARATION**
VERBUNDROHR AUS FLUORPOLYMER UND VERFAHREN ZU DESSEN HERSTELLUNG
TUBE COMPOSITE EN FLUOROPOLYMERE ET SA FABRICATION

(30) Priority: 23.02.1994 US 200941
(43) Date of publication of application: 07.01.1998
(73) Proprietor: Pilot Industries, Inc., New York, NY 10128 (US)
(72) Inventor: KRAUSE, Edward, K., Ann Arbor, MI 48103 (US); KUENZEL, Kenneth, J., Grass Lake, MI 49240 (US); WOODWARD, Frederick, Dexter, MI 48130 (US)
(74) Representative: Bryer, Kenneth Robert
(86) International application number: US9407149
(87) International publication number: WO95023036

(56) References cited:
- EP-A- 0 479 592
- WO-A-95/07176
- GB-A- 938 325
- US-A- 3 473 087
- US-A- 4 743 327
- US-A- 4 758 455
- US-A- 5 170 011

## Description

The invention pertains to the field of fluoropolymer hoses and tubes such as fluoropolymer composite pipes such as those used in fuel lines.

With the advent of increased concern over evaporative fuel emissions standards, there has been an increasing need for fuel lines that meet increased evaporative emission requirements while at the same time having high chemical and electrostatic discharge resistance. Further, in order to be economical, any fuel line must be able to be produced in large quantities as a low cost. A desired fuel line likewise should have appropriate physical properties including but not limited to sufficient tensile strength and kink resistance, or the ability of the fuel line to retain a particular shape upon bending.

Fuel line hoses of a variety of materials have been suggested over the years. Tetrafluoroethylene has been utilized and has excellent and outstanding high temperature and chemical resistance. *Hose Technology,* publisher: Applied Science Publisher, Ltd., Essex England, by: Colin W. Evans, pages 195-211. Nylon has also been utilized as a hose composition. However, fluorinated polymers are difficult to use because it is difficult to adhere other materials to them in order to form desirable composites.

U.S. Patent No. 4,933,060 discloses surface modification of fluoropolymers by reactive gas plasma. The reference, however, further indicates that in order to have sufficient bonding, adhesives must be utilized prior to the application of an additional layer. Suitable adhesives are epoxies, acrylates, urethanes, and the like.

U.S. Patent No. 4,898,638 teaches a method of manufacturing flexible gaskets which withstand chemical agents. Flexible gaskets are prepared in which one film of PTFE (polytetrafluoroethylene) is directly applied onto a sheet of raw rubber and the sheet of rubber together with the film of pTFE is subjected to heating a pressure suitable for causing the rubber to vulcanize. Use of adhesives in the bonding of fluoropolymers is likewise described in U.S. Patent No. 4,743,327, and their use is required to make the development operative. Activating fluoropolymers utilizing ammonia gas is taught in U.S. Patent No. 4,731,156.

European Patent No. 0,479,592 teaches a method of activation of a fluoropolymer surface by glow plasma of helium at atmospheric pressure. Admixture of oxygen to the helium atmosphere results in a significant reduction in activation.

None of the prior art describes a fluoropolymer with a layer of a thermosetting or thermoplastic polymer, preferably an elastomer, that is integral with and chemically bonded to the fluoropolymer, which when combined in a multi-layered composite hose or pipe, has desirable electrostatic discharge resistance, hydrocarbon evaporative emission resistance, and flexibility. Further, the prior art suggests the need for adhesives to firmly and fixedly join plastic layers.

The present invention seeks to provide a fuel pipe or tube that has a fluropolymer substrate that can be activated sufficiently to be able to have an integral and chemically bonded top coat or layer of a thermosetting or thermoplastic elastomer.

The present invention therefore seeks to avoid a requirement that additional adhesives are needed in joining the fluoropolymer layer to the thermosetting or thermoplastic elastomer. The present invention also seeks to avoid mechanical alteration of the substrate surface.

The present invention further seeks to provide fluoropolymer composite by extruding a multi-layered fluoropolymer substrate, one layer of which has desirable chemical, permeation, and electrostatic discharge resistance, and on top of the fluoropolymer layers would be an extruded thermosetting or thermoplastic elastomer layer.

The present invention therefore provides a method of preparing a layered product, which method comprises the steps of:
a) forming a first layer of a fluoropolymer substrate,
b) subjecting that layer to a charged gaseous atmosphere; and
c) applying a second layer of a thermosetting polymer or a thermoplastic elastomer to the first layer,
characterised in that:
the gaseous atmosphere is a reactive gaseous atmosphere created from one or more of ambient air, carbon monoxide, fluorinated gases, carbon dioxide, hydrogen fluoride, carbon tetrachloride or ammonia at atmospheric pressure, which chemically activates a surface of the first layer by the electrical ionization of the gas which contacts that surface; and
in that the second layer is applied directly onto the activated surface of the first layer without an intervening adhesive layer so as to form chemical bonds between the layers.

The fluoropolymer substrate is activated by subjecting the substrate to a charged gaseous atmosphere formed by electrically ionizing a gas which contacts the substrate. It can be shown through various microscopic techniques (i.e. SEM) that no significant changes occur to the physical structure of the substrate surface by exposure to the charged gaseous atmosphere utilized in this invention. Furthermore, bonding has been achieved by this method with materials such as thermoset elastomers which typically do not have processing viscosities sufficiently low to achieve adequate bond strength strictly by mechanical means. The thermosetting elastomer can contain a curing agent. Both the activation of the fluoropolymer by a charged gaseous atmosphere and the addition of a curing agent to the thermosetting elastomer serve to increase the strength of the chemical bond between the layers. Although some curing agents can increase the chemical bonding between the fluoropolymer and thermosetting elastomer layers, they are not necessary in all cases to effect the chemical adhesion.

The present invention preferably provides a fuel pipe comprised of an inner fluorocarbon layer having electrostatic discharge resistance and hydrocarbon evaporative emission resistance, and on top of and integral with the fluorocarbon layer an outer layer of a thermosetting or thermoplastic elastomer chemically bonded to the fluorocarbon layer according to the above mentioned method of the invention.

A better understanding of the present invention will be had upon reference to the following detailed description, when read in conjunction with the accompanying drawings, wherein like reference characters refer to like parts throughout the several views, and in which:
Figure 1 is a side sectional view of a three-layered fuel pipe according to the present invention;
Figure 2 is a cross-sectional view of Figure 1 along lines 2-2;
Figure 3 is a schematic diagram of a process for preparing a fuel pipe according to the present invention.

The present invention preferably provides a method of preparing a fluoropolymer composite pipe or tube. Preferably the fluoropolymer is a multi-layered fluoropolymer. More preferably the inner fluoropolymer and the entire fluoropolymer layer have hydrocarbon evaporative emission resistance. The electorstatic discharge resistance is obtained preferably by making the fluropolymer layer a conductive fluoropolymer. In this fashion, the electrostatic charge (electricity) that may be generated during the flow of fuel or other fluids through the pipe or tube can be carried to ground.

The fluoropolymers, that may be utilized are any of the available fluoropolymers, many of which are commercially available. Suitable fluoropolymers include, but are not limited to, ethylene-tetrafluoroethylene (ETFE), ethylene-chlorotrifluoroethylene (ECTFE), fluorinated ethylenepropylene (FEP), perfluoroalkoxy (PFA), polyvinylfluoride (PVF), polyvinylidene fluoride (PVDF), tetrafluoroethylene-hexafluoropropylene-vinylidenefluoride (THV), polychlorotrifluoroethylene (PCTFE), polytetrafluoroethylene (PTFE). Other fluoropolymers are those that are prepared from perfluorinated α-fluoroolefin monomers containing hydrogen atoms as well as fluorine atoms. The α-fluoroolefin has 2-6 carbon atoms. Typical α-fluoroolefins may be perfluorinated as hexafluoropropene, perfluorobutene, perfluoroisobutene, and the like; as hydrogen-containing α-fluoroolefins such as trifluoroethylene, vinylidene fluoride, vinyl fluoride, pentafluoropropane, and the like; as halogen-containing α-fluoroolefins such as trifluorochloroethylene, 1,1-difluoro-2,2 dichloroethylene, 1,2-difluoro-1,2 dichloroethylene, trifluorobromoethylene and the like; and as perfluoroalkoxyethylene polymers. The most preferred fluoropolymer is ETFE sold under the trademark Tefzel® (trademark of DuPont).

A layer of fluoropolymer that is to be conductive in order to carry away electrostatic discharge can generally be made conductive in a well known manner. This conductivity can occur by adding conductive particles to the fluoropolymer resin prior to processing. The electrically conductive particles incorporated into fluoropolymers are described in U.S. Patent No. 3,473,087, hereby incorporated by reference. Suitable conducting materials would be carbon black in the amount of 0.1 - 10 weight percent of the total fluoropolymer layer, preferably 0.1 - 2 weight percent. The carbon black is blended with the fluoropolymer prior to the extrusion step. Conductive fluoropolymer resin is likewise commercially available.

In a preferred embodiment of the present invention the fluorinated polymer is extruded by a melt extrusion technique whereby the first layer is a conductive fluoropolymer and a second layer is co-extruded on top of the first layer, wherein the second layer is a fluoropolymer without the conducting particles therein.

On top of the fluoropolymer layer, integral with it, and chemically bonded to the fluoropolymer layer is an extruded thermosetting or thermoplastic elastomer material. The thermosetting elastomer material can be a variety of materials. Suitable materials include those that can be extruded on top of the extruded fluoropolymer pipe or tube including, but not limited to, amide urethane elastomers, chlorinated polyethylene, chloroprene, chlorosulfonated polyethylene, copolyether ester, epichlorohydrin, ethylene acrylic, ethylene propylene, fluoroelastomer, perfluoroelastomer, fluorosilicone, hydrocarbon elastomers, hydrogenated nitrile butyl, isobutylene isoprene, isoprene, nitrile, polyacrylate, polybutadiene, polyester urethane, polyether urethane, polynorborene, polysulfide, polyurethanes, propylene oxide, silicone, styrene butadiene, styrenic elastomer, and thermoplastic elastomers. The most preferred thermosetting elastomer is VAMAC® ethylene/acrylic elastomer (trademark of DuPont), a copolymer of ethylene and methyl acrylate plus a cure site monomer.

Cross-linking and adhesion of the layers can occur through a number of extrusion techniques. The preferred method utilizes an autoclave amine cure system, with temperature and pressure at 160°C (320°F) and 5·33 x 10⁵ Nm⁻² (80 PSI) respectively. Another method utilizes a continuous autoclave and salt bath with temperature and pressure at 204-260°C (400-500°F) and 1 x 10⁵ Nm⁻² (1 atm), respectively. Still other methods can also be used.

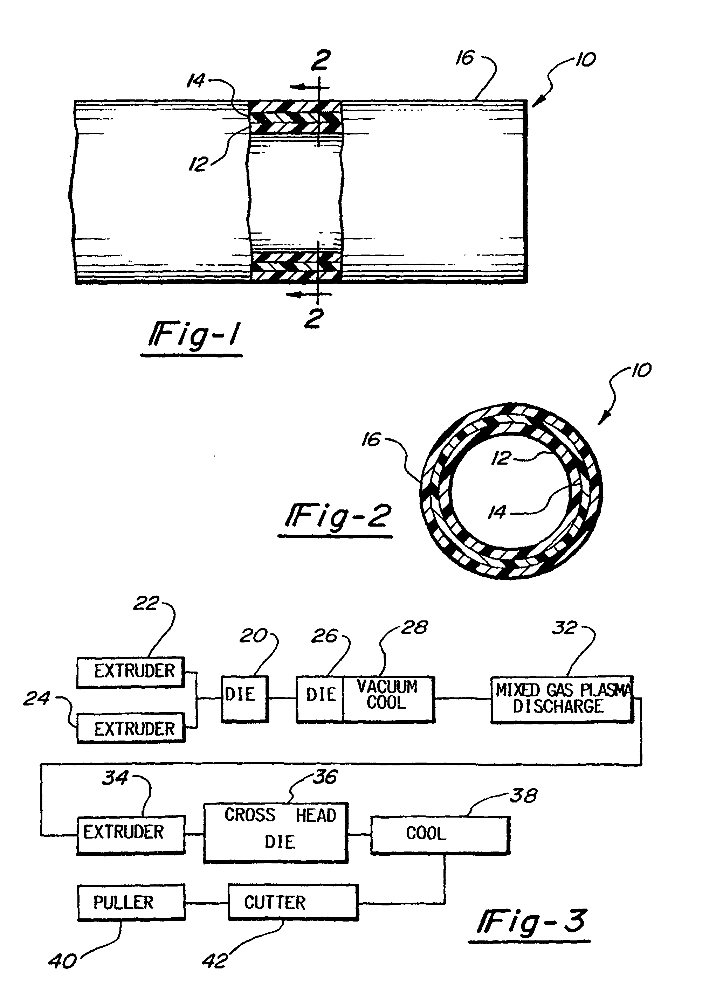

In one embodiment of the present invention the end product that is produced is a multi-layered fluoropolymer having a thermosetting or thermoplastic elastomer material 16 chemically bonded on top 10 as shown in FIGS. 1 and 2. The conductive layer 12 is co-extruded with the non-conductive layer 14. The conductive particles (not shown) are present in the layer 12.

When conductivity in the fluoropolymer layer is not desired, then the same non-conductive fluoropolymer is co-extruded to form the multiple layers. Obviously, one may desire only one fluoropolymer layer, in which case, a single extrusion die could be used. Thereafter, the additional processing steps are followed.

Additionally, a braided reinforcing material can be placed between the layers to provide added strength to the tube. This reinforcing material may be layered in between the fluoropolymer layer and the thermosetting or thermoplastic elastomer layer, or in a preferred embodiment, may be layered on top of the composite tube, with an added layer of the thermosetting or thermoplastic elastomer on top.

Prior to the extruding of the top thermosetting or,thermoplastic elastomer layer 10, the fluoropolymer is activated. In other words, the outer portion of layer 14 which is to come into contact with the layer 10 may have its surface activated by plasma discharge or corona discharge. This means that the fluoropolymer layer 14 is subjected to a charged gaseous atmosphere that is formed by electrically ionizing a gas which contacts the substrate 14. This serves to increase the chemical bond between the layers. It is most preferred that the plasma impinge upon 360° of the fluoropolymer tube. In other words, there is a first stage mixed gas plasma electrode discharge where approximately 270° of the tube is subjected to the mixed gas plasma discharge. The tube is anywhere from about 0·127 to 7·620 cm (0.05 to 3 inches), preferably 0·254 to 1·270 cm (0.1 to 0.5 inches) from the electrode as the tube passes through the mixed gas plasma electrode discharge. Thereafter, within approximately 7·620 - 91·440 cm (3 inches to 3 feet), preferably 15·240 - 45·720 cm (6 inches to 18 inches) from the first mixed gas plasma discharge device, the tube comes in contact with a second stage mixed gas plasma discharge placed on the opposite side from the first side, where again the tube is subjected to approximately a 270° contact around the tube with the mixed gas plasma discharge. In this fashion, the entire circumference of 360° of the tube is subjected to activation by mixed gas plasma discharge.

Any conventional mixed gas plasma discharge equipment can be used. One such device is available from Enercon Dyne-A-Mite, Model B12, which uses an air blown electrical arc to form the mixed gas treatment plasma. In other words, there are four separate mixed gas plasma discharge heads making up four separate stages which are in the open air, at ambient temperature and pressure. Each mixed gas plasma discharge head of the Enercon device, each trapezoidal in shape, has a pair of wire electrodes 0·165 cm (0.065 inches) diameter in the same horizontal plane separated by a gap of 0·889 cm (0.35 inches) with an overall length from the end of one wire electrode to the end of the second wire electrode of 4·83 cm (1.9 inches).

It is to be appreciated that the open air and open atmosphere is the most preferred economical approach for mixed gas plasma discharge. It is to be appreciated further that depending upon the amount of activation that is required and the particular materials that are to be applied to the fluoropolymer, closed chamber electrode discharge devices could be utilized. In a closed chamber environment, a pair of oppositely charged (positive and negative electrodes) may be utilized by passing a current therebetween, thereby ionizing a gas. The substrate can pass through the electric field which has ionized the gas. This gas may be altered by supplying additional gases to the chamber such as oxygen, nitrogen or other reactive gases such as carbon monoxide, fluorinated gases, carbon dioxide, hydrogen fluoride, carbon tetrafluoride, ammonia, and the like.

A coextrusion die is used for high production rates. Therefore, the extruded tube as it passes through the mixed gas plasma discharge stage moves at a high constant rate. Preferably, the rate is from 0·3 to 45·7 m per minute (1 to 150 linear feet per minute, FPM), preferably 4·6 to 18·3 m per minute (15 to 60 FPM). The Enercon device has a treatment area for the mixed gas plasma discharge with a size of about 2½ inches by 2 inches per head.

When the Enercon Dyne-A-Mite mixed gas plasma discharge device is utilized, the activated tube is not significantly hot to the touch, but is perhaps 5·5 or 11°C (10 or 20°F over) ambient temperature. This increases the safety in manufacturing the fuel tube or pipe.

After the activation of the fluorinated tube, if activation is utilized, the thermosetting or thermoplastic elastomer is extruded through the cross-head die shown schematically in FIG. 3. If the thermosetting elastomer material does not already contain a curing agent, then a curing agent may be added prior to layering on top of the fluoropolymer. Just as with the activation step, the addition of the curing agent serves to increase the strength of the chemical bond between the layers. The cross-head die is at an extrusion temperature sufficient to soften the thermosetting elastomer material. Generally, the temperature is significantly less than the extrusion temperature of the fluorinated plastic. The operative temperature for the cross-head die would range from about 37·7 to about 260·0°C (100 to about 500 °F), preferably 48·8 to about 93·3°C (120 to about 200°F), with screw rotations per minute (RPM) of 10 to 100 RPM, preferably 20 to 60 RPM, with a line speed of approximately 1·52 to 30·48 m (5 to 100 feet) per minute, preferably 4·57 to 21·34 m (15 to 70 feet per minute).

The Enercon device is preferably operated at an output of 15,000 volts with 30 milliamps plasma per electrode with 2 electrode stages being employed.

The wattage that is applied to the electrodes in order to ionize the gas can vary substantially. For example, the wattage may vary from 250 joules/sec to 600 joules/sec when the tube being treated is moving about 25 sq. inches/min. (assuming 1 inch outer diameter tube, 12 inches long), i.e. about 10 to 24 joules per linear foot (30·48 cm) of tube.

By exposing many of the fluoropolymer substrates to the charged gaseous atmosphere described various functional groups such as carbonyl, carboxyl, hydroxyl groups and others may be inserted into the molecular structure of the substrate surface. These groups can provide sites for potential chemical bonding with other materials by way of secondary interactions such as hydrogen bonding, van der Waal's interactions, and others. These interactions may occur between the substrate and groups present in the molecular make-up of the applied polymer layer, or between the substrate and additives contained within the applied polymer layer (such as curing agents). These interactions achieve a chemical bond between the substrate and second layer. For example, many thermosetting materials such as ethylene-acrylic elastomer (VAMAC®) may utilize amine curing agents such as triethylene tetramine, which, along with ethylene-acrylic elastomer (VAMAC®) are capable of forming hydrogen bonds with the activated substrate surface.

There may also exist the possibility of the formation covalent chemical bonds to the activated substrate surface. curing agents such as amines react with carboxyl curing sites of a neat polymer matrix to form amide crosslinks. Similarly, curing agents present at the interface may react with chemical groups in the substrate surface forming covalent bonds to the substrate. These linkages may further react to the applied thermoset/polymer layer.

Turning now to a description of the drawings, FIG. 1 is a side sectional view of a three-layered fuel pipe. A two-layered pipe may also be utilized in which there is a single, rather than double, fluoropolymer layer. FIG. 2 is a cross-sectional view of a three-layered pipe. Again, a two-layered pipe may also be utilized. The schematic diagram of FIG. 3 indicates that coextrusion takes place in the coextrusion die 20 from extruders 22 and 24. After the formed tube leaves die 20, it then enters into die 26 which is in the entrance-way to the vacuum water-cooled chamber 28. The temperature of the water is room temperature. The tube may then be exposed to the mixed gas plasma discharge 32 schematically show in FIG. 3. Thereafter, the activated fluoropolymer substrate is subjected to an extrusion of a thermosetting elastomer from extruder 34. The fluoropolymer inner layer passes through a cross-head die for sizing at reference numeral 36. Thereafter the composite tube is cooled by vacuum cooler 38. The tube is pulled axially through the vacuum cooler by puller 40 and thereafter is cut by cutter 42 to the desired size.

The fuel line or pipe of the present invention is designed to carry hydrocarbon fuels that are generally used in vehicles such as automobiles, trucks, airplanes, locomotives, and the like. The fuel is generally heavy in hydrocarbon materials such as propane, butane and aromatics, such as benzene, toluene and other combustible organic materials. The combined laminate or composite therefore prevents the escape of fuel vapors from the fuel line. Other fuels such as alcohol-based fuels may also be carried in the fuel pipe of the present invention. Further, other hydrocarbon-based fluids such as hydraulic fluids may likewise be utilized in conjunction with the pipe of the present invention. Finally, the properties of the pipe of this invention make it an excellent choice for general chemical handling.

It will be appreciated that by using the multiple extrusion stages at different positions in the manufacturing process, one can efficiently combine a fluoropolymer that has a high melt extrusion temperature with a thermosetting elastomer or thermoplastic elastomer material which typically have substantially lower extrusion temperatures. By melt extruding the fluoropolymer layer(s) first and then cooling down the formed pipe by running the formed tube through room temperature water, one can thereafter use a separate and distinctly different thermosetting or thermoplastic elastomer to extrude onto the pipe and avoid thermal degradation.

### Example 1

The surface energy of various treated fluoropolymers was tested. When a dyne solution is placed on a material surface and wets out, that indicates that the material has a higher surface energy than the dyne solution. If the drop "beads up," the material has a lower surface energy than the dyne solution. The use of the dyne solutions is a technique for determining the surface energy of materials. Various samples were prepared of fluoropolymer substrates. Each of the substrates were subjected to a dyne solution identified as ethyl Cello-Solve-Formamide (Trademark of Corotec of Connecticut, U.S.A.). The sample plaques were wiped clean with a dry cloth to remove surface contamination. Solvent was not used to avoid any surface effects from the residue. The dyne solution was applied in a single side-stroke of the brush to leave a 1·90 by 2·50 cm (¾ inch by 1 inch) patch of solution. Measurements were taken on both treated and untreated samples. The values recorded represent solution which held in a continuous film for greater than 2 seconds. Treated samples were prepared by sweeping the discharge head of the Enercon-Dyne-A-Mite device. Treated samples were prepared by sweeping the discharge head across the plaque at a rate of 0·64 to 1·27 cm (¼ inch to ½ inch) away from the sample surface. Two passes were made to ensure complete coverage. Listed below are the test results for the samples tested.

| **Sample** | **Initial (E**_{**s**} **-** **Surf. Energy)** | **After Treatment** **(E**_{**s**} **- Surf. Energy)** |
|---|---|---|
| KYNAR 740¹ | 42,41,42 | 44,45,44 |
| HYLAR 460² | 45,46,45 | 64,58,60 |
| HALAR 500³ | 34,35,34 | 40,37,39 |
| TEFZEL 200⁴ | L30,L30,L30 | 34,34,33 |

| | | |
|---|---|---|
| ¹ KYNAR 740 is a trademark of Atochem of North America for PVDF. | | |
| ² HYLAR 460 is a trademark of Ausimont of Morristown, New Jersey for PVDF. | | |
| ³ HALAR 500 is a trademark of Ausimont of Morristown, New Jersey for ECTFE. | | |
| ⁴ TEFZEL 200 is a trademark of DuPont of Wilmington, Delaware for ETFE. | | |

The results indicate that there is a change in surface energy which indicates that the Enercon mixed gas plasma discharge device activates the fluorinated samples, and that they may be satisfactory substrates for extrusion of a thermosetting or thermoplastic elastomer through the formation of chemical bonds between the layers.

### Example 2

Two 10·2 cm x 10·2 cm x 0·025 cm (4" x 4" x 0.010") sheets of extruded ETFE (DuPont Tefzel® 200) were labeled as sample A and sample B. A slab of uncured ethylene/acrylic elastomer (DuPont VAMAC®) was placed over sample A and the two materials were clamped together for curing. Sample B was exposed for approximately 5 seconds to a charged gaseous atmosphere as previously described and then combined with a VAMAC® layer and clamped as with sample A. Both samples were placed in a circulating air oven at 180° for 30 minutes to cure the thermosetting layer. Samples were then removed and allowed to cool at room temperature for 30 minutes. Samples were removed from clamps and cut into strips using an ASTM 0·32 x 15·2 cm (⅛" x 6") die and Arbor press. Six strips from each sample were tested for lap shear strength by separating the layers at the ends of the strip, leaving a 30 mm section of joined material at the center. Each layer of the strip was attached to an opposing tensile machine fixture and the sample was pulled apart at a rate of 50.8 mm/min. Maximum load obtained during the test was recorded. As can be seen from the results, a greater than 500% increase in bond strength over the unexposed samples was achieved by exposure of the substrate to the charged gaseous atmosphere. Actual bond strength of exposed samples is assumed to be greater than reported as all 6 strips failed by tensile failure of the ETFE layer, rather than by separation at the interface.

| **Sample** | **Average Maximum** **Load (Newtons)** | **Standard** **Deviation** |
|---|---|---|
| Sample A No exposure | 4.5 N | 0.8 |
| | | |
| Sample B Exposed to charged gaseous atmosphere | 28.5 N | 5 |

While the forms of the invention herein described constitute presently preferred embodiments, many other are possible. It is not intended herein to mention all the possible equivalent forms or ramifications of the invention. It is understood that the terms used herein are merely descriptive rather than limiting and that various changes may be made without departing from the scope of the claims. For example, the invention is equally applicable to a fuel filler neck tube or to fluoropolymer/thermosetting elastomer composites in general.

## Claims

1. A method of preparing a layered product, which method comprises the steps of:
a) forming a first layer of a fluoropolymer substrate,
b) subjecting that layer to a charged gaseous atmosphere; and
c) applying a second layer of a thermosetting polymer or a thermoplastic elastomer to the first layer,
**characterised in that**:
the gaseous atmosphere is a reactive gaseous atmosphere created from one or more of ambient air, carbon monoxide, fluorinated gases, carbon dioxide, hydrogen fluoride, carbon tetrachloride or ammonia at atmospheric pressure, which chemically activates a surface of the first layer by the electrical ionization of the gas which contacts that surface; and
**in that** the second layer is applied directly onto the activated surface of the first layer without an intervening adhesive layer so as to form chemical bonds between the layers.

2. A method according to claim 1, which further comprises the step of applying heat and/or pressure to the layered product after step c).

3. A method according to any one of claims 1 or 2, in which in step b) the fluoropolymer substrate is moved through the charged gaseous atmosphere at a rate of 0.3 to 45.7 m per minute (1 to 50 linear feet/minute).

4. A method according to any one of Claims 1, 2 or 3, wherein the thermosetting polymer or thermoplastic elastomer is one or more of amide urethane elastomers, chlorinated polyethylene, chloroprene, chlorosulfonated polyethylene, copolyether ester, epichlorohydrin, ethylene acrylic, ethylene propylene, fluoroelastomer, perfluoroelastomer, fluorosilicone, hydrocarbon elastomers, hydrogenated nitrile butyl, isobutylene isoprene, isoprene, nitrile, polyacrylate, polybutadiene, polyester urethane, polyether urethane, polynorborene, polysulfide, polyurethanes, propylene oxide silicone, styrene butadiene, styrenic elastomer or ethylene/acrylic elastomer and thermosplastic elastomers .

5. A method according to any one of claims 1, 2, 3 or 4, in which step b) is performed by subjecting the layer to the charged gaseous atmosphere at ambient temperature.

6. A method according to any preceding claim, which further includes the step of adding a curing agent to the thermosetting polymer or thermoplastic elastomer prior to step c).

7. A method according to any preceding claims, wherein the fluoropolymer substrate is a multi-layered fluoropolymer substrate.

8. A method according to Claim 7, wherein the multi-layered fluoropolymer substrate has a first conductive fluoropolymer layer and a second non-conductive fluoropolymer layer.

9. A method according to Claim 8, wherein the thermosetting polymer or thermoplastic elastomer is applied to the non-conductive layer.

10. A method according to any preceding claim, wherein the layered product is a tube.

11. A method according to any preceding claim, wherein the formation of the first layer in step a) and/or the application of the second layer in step c) is by continuous extrusion.

12. A method according to any preceding claim, wherein step b) is carried out by operating the means of charging the reactive gaseous atmosphere at 250 to 600 joules per second.

## Patentansprüche

1. Verfahren zur Herstellung eines geschichteten Produktes, wobei das Verfahren die Stufen
a) Bildung einer ersten Schicht aus einem Fluorpolymersubstrat,
b) Unterwerfen dieser Schicht einer gasförmig beschickten Atmosphäre, und
c) Aufbringen einer zweiten Schicht aus einem wärmehärtbaren Polymer oder einem thermoplastischen Elastomer auf die erste Schicht
umfaßt,
**dadurch gekennzeichnet, daß**
die gasförmige Atmosphäre eine aus einer oder mehreren von Umgebungsluft, Kohlenmonoxid, fluorierten Gasen, Kohlendioxid, Wasserstofffluorid, Kohlenstofftetrachlorid oder Ammoniak bei atmosphärischem Durck kreierte reaktive gasförmige Atmosphäre ist, die eine Oberfläche der ersten Schicht durch die elektronische lonisierung des diese Oberfläche kontaktierenden Gases aktiviert, und die zweite Schicht direkt auf die aktivierte Oberfläche der ersten Schicht ohne eine dazwischenliegende klebende Schicht aufgebracht wird, so daß chemische Bindungen zwischen den Schichten gebildet werden.

2. Verfahren nach Anspruch 1, das weiter die Stufe der Anwendung von Wärme und/oder Druck auf das geschichtete Produkt nach Stufe c) umfaßt.

3. Verfahren nach einem der Ansprüche 1 oder 2, worin in Stufe b) das Fluorpolymersubstrat durch die beschickte gasförmige Atmosphäre in einem Ausmaß von 0,3 bis 45,7 m pro Minute (1 to 50 linear feet/minute) bewegt wird.

4. Verfahren nach einem der Ansprüche 1, 2 oder 3, worin das wärmehärtbare Polymer oder das thermoplastische Elastomer eines oder mehrere von Amidurethanelastomeren, chloriertes Polyethylen, Chloropren, chlorsulfoniertes Polyethylen, Copolyetherester, Epichlorhydrin, Ethylenacryl, Ethylenpropylen, Fluorelastomer, Perfluorelastomer, Fluorsilicon, Kohlenwasserstoffelastomere, hydriertes Nitrilbutyl, Isobutylenisopren, Isopren, Nitril, Polyacrylat, Polybutadien, Polyesterurethan, Polyetherurethan, Polynorbornen, Polysulfid, Polyurethane, Propylenoxidsilicon, Styrolbutadien, styrolisches Elastomer oder Ethylen/Acryl-Elastomere und thermoplastischen Elastomeren sind.

5. Verfahren nach einem der Ansprüche 1, 2, 3 oder 4, worin Stufe b) durch Unterwerfen der Schicht der beschickten gasförmigen Atmosphäre bei Umgebungstemperatur durchgeführt wird.

6. Verfahren nach einem der vorhergehenden Ansprüche, das weiter die Stufe der Zugabe eines Härtungsmittels zu dem wärmehärtbaren Polymer oder thermoplastischen Elastomer vor der Stufe c) beinhaltet.

7. Verfahren nach einem der vorhergehenden Ansprüche, worin das Fluorpolymersubstrat ein vielschichtiges Fluorpolymersubstrat ist.

8. Verfahren nach Anspruch 7, worin das vielschichtige Fluorpolymersubstrat eine erste leitende Fluorpolymerschicht und eine zweite nicht-leitende Fluorpolymerschicht aufweist.

9. Verfahren nach Anspruch 8, worin das wärmehärtbare Polymer oder thermoplastische Elastomer auf die nicht-leitende Schicht aufgebracht wird.

10. Verfahren nach einem der vorhergehenden Ansprüche, worin das geschichtete Produkt ein Rohr ist.

11. Verfahren nach einem der vorhergehenden Ansprüche, worin die Bildung der ersten Schicht in Stufe a) und/oder die Aufbringung der zweiten Schicht in Stufe c) durch kontinuierliche Extrusion erfolgt.

12. Verfahren nach einem der vorhergehenden Ansprüche, worin Stufe b) durch Betreiben der Mittel zur Beschickung der reaktiven gasförmigen Atmosphäre bei 250 bis 600 Joule pro Sekunde durchgeführt wird.

## Revendications

1. Procédé de préparation d'un produit en couches, lequel procédé comprend les étapes consistant à :
a) former une première couche d'un substrat de fluoropolymère,
b) soumettre cette couche à une atmosphère gazeuse chargée, et
c) appliquer une seconde couche d'un polymère thermodurcissable ou d'un élastomère thermoplastique sur la première couche,
**caractérisé en ce que** :
l'atmosphère gazeuse est une atmosphère gazeuse réactive créée à partir d'un ou plusieurs gaz parmi l'air ambiant, le monoxyde de carbone, des gaz fluorés, le dioxyde de carbone, le fluorure d'hydrogène, le tétrachlorure de carbone ou l'ammoniac à la pression atmosphérique, qui active chimiquement une surface de la première couche grâce à l'ionisation électrique du gaz qui vient en contact avec cette surface, et
**en ce que** la seconde couche est appliquée directement sur la surface activée de la première couche sans couche adhésive intermédiaire de façon à former des liaisons chimiques entre les couches.

2. Procédé selon la revendication 1, lequel comprend en outre l'étape consistant à appliquer de la chaleur et/ou une pression au produit en couches après l'étape c).

3. Procédé selon l'une quelconque des revendications 1 ou 2, dans lequel, dans l'étape b), le substrat de fluoropolymère est déplacé dans une atmosphère gazeuse chargée à une vitesse de 0,3 à 45,7 m par minute (1 à 50 pied linéaire/minute).

4. Procédé selon l'une quelconque des revendications des revendications 1, 2 ou 3, dans lequel le polymère thermodurcissable ou l'élastomère thermoplastique est un ou plusieurs parmi des élastomères amide-uréthane, un polyéthylène chloré, un chloroprène, un polyéthylène chlorosulfoné, un copolyéther-ester, l'épichlorydrine, un éthylène-acrylique, un éthylène-propylène, un fluoro-élastomère, un perfluoro-élastomère, une fluorosilicone, des élastomères hydrocarbonés, un nitrile-butyle hydrogéné, un isobutylène-isoprène, un isoprène, un nitrile, un polyacrylate, un polybutadiène, un polyesther-uréthane, un polyéther-uréthane, un polynorborène, un polysulfure, des polyuréthanes, un oxyde de propylène-silicone, un styrène-butadiène, un élastomère styrénique et/ou un élastomère éthylène/acrylique et des élastomères thermoplastiques.

5. Procédé selon l'une quelconque des revendications 1, 2, 3 ou 4, dans lequel l'étape b) est exécutée en soumettant la couche à l'atmosphère gazeuse chargée à la température ambiante.

6. Procédé selon l'une quelconque des revendications précédentes, lequel comprend en outre l'étape consistant à ajouter un agent de polymérisation au polymère thermodurcissable ou à l'élastomère thermoplastique avant l'étape c).

7. Procédé selon l'une quelconque des revendications précédentes, dans lequel le substrat de fluoropolymère est un substrat de fluoropolymère à couches multiples.

8. Procédé selon la revendication 7, dans lequel le substrat de fluoropolymère à couches multiples comporte une première couche de fluoropolymère conductrice et une seconde couche de fluoropolymère non conductrice.

9. Procédé selon la revendication 8, dans lequel le polymère thermodurcissable ou l'élastomère thermoplastique est appliqué sur la couche non conductrice.

10. Procédé selon l'une quelconque des revendications précédentes, dans lequel le produit en couche est un tube.

11. Procédé selon l'une quelconque des revendications précédentes, dans lequel la formation de la première couche dans l'étape a) et/ou l'application de la seconde couche dans l'étape c) est réalisée par extrusion continue.

12. Procédé selon l'une quelconque des revendications précédentes, dans lequel l'étape b) est exécutée en mettant en oeuvre le moyen de charge de l'atmosphère gazeuse réactive à un niveau de 250 à 600 joules par seconde.
